# EUROPEAN PATENT SPECIFICATION

(11) **EP 2 373 517 B1**
(45) Date of publication and mention of the grant of the patent: **14.08.2019**
(21) Application number: 10701394.8
(22) Date of filing: 05.01.2010
(51) Int. Cl.: B60N 2/01, B60N 2/015, B60N 2/24, B60N 2/68, B60P 3/42, B62D 33/06

(54) **SEATING APPARATUS FOR USE ON A VEHICLE HAVING A FLAT CARRYING AREA**
SITZVORRICHTUNG ZUR VERWENDUNG AN EINEM FAHRZEUG MIT EBENER LADEFLÄCHE
APPAREIL DE SIÈGE DESTINÉS À ÊTRE UTILISÉ SUR UN VÉHICULE AVEC UNE SURFACE DE CHARGE PLANE

(30) Priority: 05.01.2009 GB 0900105
(43) Date of publication of application: 12.10.2011
(73) Proprietor: Seating Design & Development Limited, Brentwood Essex CM14 4SX (GB)
(72) Inventor: MARSHALL, Neal, West Midlands B91 1JX (GB); HALLETT, Brian, RIchard, Essex CM14 4PL (GB)
(74) Representative: Jones, Graham Henry
(86) International application number: PCT/GB2010/000006
(87) International publication number: WO 2010/076573

(56) References cited:
- DE-A1- 10 323 076
- US-A- 2 173 076

## Description

This invention relates to seating apparatus and, more especially, this invention relates to seating apparatus for use on a vehicle having a flat carrying area. This invention also relates to the vehicle when provided with the seating apparatus.

Vehicles for carrying cargo and/or persons are often in the form of a truck having a driving cab and a back which forms a storage area. The back of the vehicle can be a flat back or it can be canvas-covered with drop down sides and a tail gate. There is generally no structural protection for the storage area. The storage area may be for carrying the cargo and/or persons. If the storage area is to carry persons, then the persons may be military personnel. In order to carry the persons, it is known to install bench-type seating with specific securing means securing the bench-type seating to the back of the vehicle. The vehicle may be an armoured military vehicle for carrying military personnel on the bench-type seating. Irrespective of the type of vehicle, in the event that the vehicle is involved in an accident, persons sitting on the bench-type seating are often thrown about and they invariably suffer injury or death. The problem is especially acute if the vehicle is involved in an accident which causes the vehicle to roll over on its side.

US 2173076 discloses a vehicle with a demountable camping cabin. The camping cabin has side facing seats and a frame roof. The side facing seats are such that persons seated on the seats face inwardly.

DE 10323076 discloses a military vehicle with forward and rearward facing seats, and a frame which extends above the heads of military personnel sitting on the seats. DE 10323076 does not disclose side facing seats.

International Patent Publication Nos. WO 2005/002916 and WO 2006/005965 obviate or reduce the above mentioned problem by providing seating apparatus which comprises a frame which gives side roll over protection to persons on side facing seats of the seating apparatus.

The frames disclosed in WO 2005/002916 and WO 2006/005965 do not provide as much protection as is desired in the event of an object falling onto the seating apparatus from above and whilst the vehicle is travelling normally. It is an aim of the present invention to obviate or reduce this problem.

Accordingly, the present invention provides seating apparatus for use on a vehicle having a flat carrying area, which seating apparatus comprises a frame giving roll over protection to a person seated on the seating apparatus in the event that the vehicle should roll over onto its side, at least one side facing seat which is mounted in the frame and which is such that the person sits on the seat facing outwardly with their back to a vertical plane extending longitudinally through the centre of the frame, and securing means for releasably securing the seating apparatus on the flat carrying area of the vehicle whereby the seating apparatus is able to be secured on the flat carrying area and removed from the flat carrying area, characterised in that the frame includes at least one protection bar which extends longitudinally with respect to the vertical plane, which is offset from the vertical plane, and which is positioned at an upper part of the frame over the seat and in the vicinity of a head of the person when the person is seated on the seat and is facing outwardly with their back to the vertical plane, whereby the protection bar affords protection to the person on the seat in the event of an object falling towards the seating apparatus from above and whilst the vehicle is travelling normally.

The protection bar is especially advantageous if the vehicle is travelling through wooded areas where branches or tree trunks may fall or topple onto the vehicle. The branches or tree trunks may topple as a result of being rendered unsafe due to age or previous military or other activity in the area. The use of the securing means enables the seating apparatus to be deployed as and when necessary. When the seating apparatus is not required, then the vehicle is available for carrying other types of cargo such for example as goods in packaged containers.

The seating apparatus may be one in which there is a plurality of the side facing seats, with at least a first one of the seats facing a first side of the vehicle and at least a second one of the seats facing a second side of the vehicle, and in which there are two of the protection bars, with a first one of the protection bars being for a first one of the seats facing the first side of the vehicle, and with a second one of the protection bars being for the second one of the seats facing the second side of the vehicle.

Usually, the plurality of seats will be arranged in two rows with the first row facing the first side of the vehicle and the second row facing the second side of the vehicle. Usually there will be a plurality of seats in each row. Thus, for example, there may be ten or twelve of the seats in each row.

The seating apparatus may be one in which the seats are demountable from the remainder of the frame. This reduces the weight of the frame during installation. Once the frame has been installed on the flat carrying area, the seats can be installed. Alternatively, if desired, the seats can be permanently secured to the frame.

The or each protection bar will usually be integrally formed with the remainder of the frame. Thus the or each protection bar may be welded to the remainder of the frame.

The or each protection bar may be offset from the vertical plane such as to make an angle of 5 - 25° with the vertical plane. The or each protection bar may make an angle of 20° with the vertical plane.

The or each protection bar may be at a height which enables easy access to the seat for getting on and off the seat.

The present invention also provides a vehicle provided with the seating apparatus.

An embodiment of the invention will now be described solely by way of example and with reference to the accompanying drawings in which:
Figure 1 is a view from one side of seating apparatus on a vehicle having a flat carrying area; and
Figure 2 is an end view of the seating apparatus shown in Figure 1.

Referring to the drawings, there is shown seating apparatus 2 for use on a vehicle 4 having a flat carrying area 6. For simplicity of illustration, the vehicle 4 has not been shown in detail but it comprises a driving cab at a front end of the flat carrying area 6.

The seating apparatus 2 comprises a frame 8 giving roll over protection to a person 10 seated on the seating apparatus 2 in the event that the vehicle 4 should roll over onto its side. The seating apparatus 2 also comprises at least one side facing seat 12 which is mounted in the frame 8 and which is such that the person 10 sits on the seat 12 facing outwardly with their back to a vertical plane 18 extending longitudinally through the centre of the frame 8. The seating apparatus 2 further comprises securing means 14 for releasably securing the seating apparatus 2 on the flat carrying area 6 of the vehicle 4, whereby the seating apparatus is able to be secured on the flat carrying area 6 and removed from the flat carrying area 6.

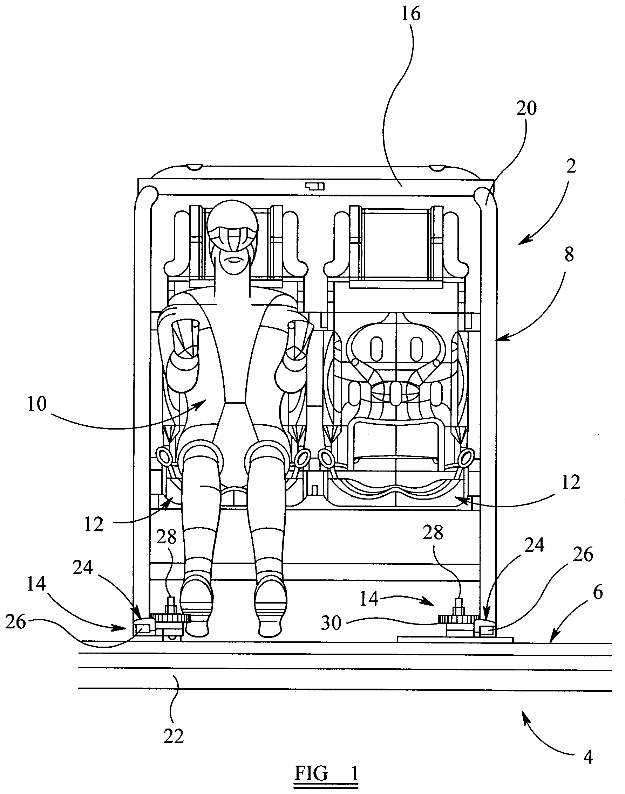

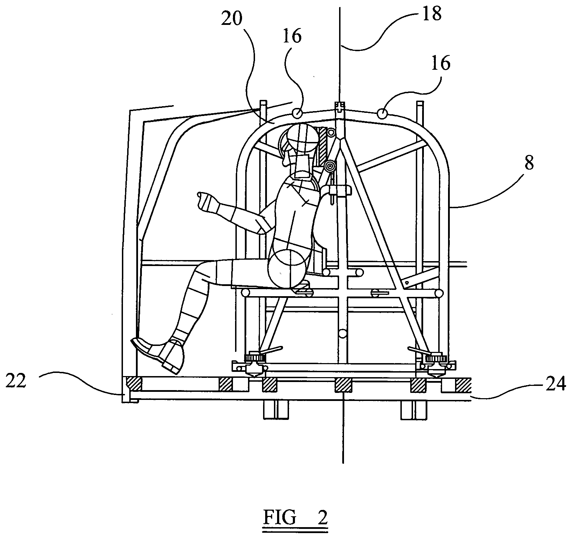

The frame 8 includes at least one protection bar 16. The protection bar 16 extends longitudinally with respect to the the vertical plane 18. As can best be appreciated from Figure 2, the protection bar 16 is offset from the vertical plane 18 extending longitudinally through the centre of the frame 8. The protection bar 16 is positioned at an upper part 20 of the frame 8 over the seat 12 and in the vicinity of a head of the person 10 when the person 10 is seated on the seat 12 and is facing outwardly with their back to the vertical plane 18. The protection bar 16 affords protection to the person 10 on the seat 12 in the event of an object (not shown) falling onto the seating apparatus 2 from above and whilst the vehicle 4 is travelling normally. As shown in Figure 1, the normal direction of travel of the vehicle 4 would be to the left.

The seating apparatus 2 is such that there is a plurality of the side facing seats 12. More specifically, there are two of the seats 12 facing a first side 22 of the vehicle 4 as can be appreciated from Figures 1 and 2. There are also two of the seats 4 facing a second side 24 of the vehicle 4. These seats 12 facing the second side 24 of the vehicle 2 are not shown in Figure 2 and this is to illustrate the fact that the seats 12 are demountable from the remainder of the frame 8 in order to reduce the weight of the frame 8 during installation. Once the frame 8 has been installed on the flat carrying area 6, the seats 12 can be installed. Alternatively, if desired, the seats 12 can be permanently secured to the frame 8.

As shown in Figure 2, there are two of the protection bars 16. A first one of the protection bars 16 is for the two seats 12 facing the first side 22 of the vehicle 4. The second one of the protection bars 16 is for the seats 12 facing the second side 24 of the vehicle 4.

As can be appreciated from Figure 1, the seats 12 on either side 22, 24 of the vehicle 4 are arranged in two rows, with the first row facing the first side 22 of the vehicle 4, and the second row facing the second side 24 of the vehicle 4.

The protection bars 16 are integrally formed by welding with the remainder of the frame 8. Each protection bar 16 makes an angle of approximately 20° with the vertical plane 18. Each protection bar 16 is at a height which enables easy access by the person 10 to the seat 12 for getting on and off the seat 12.

Apart from the provision of the protection bars 16, the frame 8 may be constructed as shown in WO 2005/002916 and WO 2006/005965.

The securing means 14 may comprise a forked arrangement 24 which rests on top of a frame member 26. The securing means 14 may also comprise a handle 28 which, when moved through 90°, moves a spigot in relation to an elongated hole, for example a star shaped hole or an elliptical hole. This causes the securing means 14 to secure in a two-dimensional manner. A hand wheel 30 is then able to be rotated to tighten and secure the forked arrangement 24 on top of the frame member 26 in a vertical direction. Alternatively, if desired, the securing means 14 may be as disclosed in WO 2005/002916 and WO 2006/005965.

The seats 12 may be as shown in the drawings. Alternatively, the seats 12 may be as shown in WO 2006/040516. Thus the seats 12 may each be such that they comprise a seat portion having a concave recess for receiving the buttocks of the person 10, with the seat portion being made of a hard material which does not compress when sat upon by the person 10, and with the concave recess comprising two depressions connected together by a central neck part, and with the concave recess extending into a first concave passage portion for receiving a rear thigh part of a first leg of the person 10, and into a second concave passage portion for receiving a rear thigh part of a second leg of the person 10.

It is to be appreciated that the embodiment of the invention described above with reference to the accompanying drawings has been given by way of example only and that modifications, for example those mentioned above, may be effected, as long as they remain within the scope of the appended claims.

## Claims

1. Seating apparatus (2) for use on a vehicle (4) having a flat carrying area (6), which seating apparatus (2) comprises a frame (8) giving roll over protection to a person (10) seated on the seating apparatus (2) in the event that the vehicle (4) should roll over onto its side, at least one side facing seat (12) which is mounted in the frame (8) and which is such that the person (10) sits on the seat (12) facing outwardly with their back to a vertical plane (18) extending longitudinally through the centre of the frame (8), and securing means (14) for releasably securing the seating apparatus (2) on the flat carrying area (6) of the vehicle (4) whereby the seating apparatus (2) is able to be secured on the flat carrying area (6) and removed from the flat carrying area (6), **characterised in that** the frame (8) includes at least one protection bar (16) which extends longitudinally with respect to the vertical plane (18), which is offset from the vertical plane (18), and which is positioned at an upper part (20) of the frame (8) over the seat (12) and in the vicinity of a head of the person (10) when the person (10) is seated on the seat (12) and is facing outwardly with their back to the vertical plane (18), whereby the protection bar (16) affords protection to the person (10) on the seat (12) in the event of an object falling towards the seating apparatus (2) from above and whilst the vehicle (4) is travelling normally.

2. Seating apparatus (2) according to claim 1 in which there is a plurality of the side facing seats (12), with at least a first one of the seats (12) facing a first side of the vehicle (4) and at least a second one of the seats (12) facing a second side of the vehicle (4), and in which there are two of the protection bars (16), with a first one of the protection bars (16) being for the first one of the seats (12) facing the first side of the vehicle (4), and with a second one of the protection bars (16) being for the second one of the seats (12) facing the second side of the vehicle (4).

3. Seating apparatus (2) according to claim 2 in which the plurality of seats (12) are arranged in two rows with the first row facing the first side of the vehicle (4) and the second row facing the second side of the vehicle (4).

4. Seating apparatus (2) according to claim 3 in which the seats (12) are demountable from the remainder of the frame (8).

5. Seating apparatus (2) according to any one of the preceding claims in which the or each protection bar (16) is integrally formed with the remainder of the frame (8).

6. Seating apparatus (2) according to any one of the preceding claims in which the or each protection bar (16) is offset from the vertical plane (18) such as to make an angle of 5 - 25° with the vertical plane (18).

7. Seating apparatus (2) according to claim 6 in which the or each protection bar (16) makes an angle of 20° with the vertical plane (18).

8. Seating apparatus (2) according to any one of the preceding claims in which the or each protection bar (16) is at a height which enables easy access to the seat (12) for getting on and off the seat (12).

9. A vehicle (4) provided with seating apparatus (2) according to any one of the preceding claims.

## Patentansprüche

1. Sitzvorrichtung (2) zur Verwendung auf einem Fahrzeug (4) mit einem flachen Ladebereich (6), wobei die Sitzvorrichtung (2) einen Rahmen (8), der einer auf der Sitzvorrichtung (2) sitzenden Person (10) für den Fall, dass sich das Fahrzeug (4) überschlägt, Überrollschutz bietet, mindestens einen einer Seite zugewandten Sitz (12), der in dem Rahmen (8) montiert und derart ausgelegt ist, dass die auf dem Sitz (12) sitzende Person (10) nach außen gewandt ist, wobei ihr Rücken einer vertikalen Ebene (18) zugewandt ist, die sich in Längsrichtung durch die Mitte des Rahmens (8) erstreckt, und ein Befestigungsmittel (14) umfasst, um die Sitzvorrichtung (2) lösbar auf dem flachen Ladebereich (6) des Fahrzeugs (4) zu befestigen, wodurch die Sitzvorrichtung (2) auf dem flachen Ladebereich (6) befestigt und von dem flachen Ladebereich (6) entfernt werden kann, **dadurch gekennzeichnet, dass** der Rahmen (8) mindestens eine Schutzstange (16) aufweist, die sich in Längsrichtung bezüglich der vertikalen Ebene (18) erstreckt, die von der vertikalen Ebene (18) versetzt ist und die an einem oberen Teil (20) des Rahmens (8) über dem Sitz (12) und in der Nähe eines Kopfs der Person (10) positioniert ist, wenn die Person (10) auf dem Sitz (12) sitzt und nach außen gewandt ist, wobei ihr Rücken der vertikalen Ebene (18) zugewandt ist, wodurch die Schutzstange (16) der auf dem Sitz (12) sitzenden Person (10) für den Fall, dass ein Gegenstand von oben zu der Sitzvorrichtung (2) hin fällt, und während normaler Fahrt des Fahrzeugs (4) Schutz bietet.

2. Sitzvorrichtung (2) nach Anspruch 1, wobei eine Vielzahl der einer Seite zugewandten Sitze (12) vorliegt, wobei mindestens ein erster der Sitze (12) einer ersten Seite des Fahrzeugs (4) zugewandt ist und mindestens ein zweiter der Sitze (12) einer zweiten Seite des Fahrzeugs (4) zugewandt ist und wobei zwei der Schutzstangen (16) vorliegen, wobei eine erste der Schutzstangen (16) für den ersten der Sitze (12) bestimmt ist, der der ersten Seite des Fahrzeugs (4) zugewandt ist, und wobei eine zweite der Schutzstangen (16) für den zweiten der Sitze (12) bestimmt ist, der der zweiten Seite des Fahrzeugs (4) zugewandt ist.

3. Sitzvorrichtung (2) nach Anspruch 2, wobei die Vielzahl von Sitzen (12) in zwei Reihen angeordnet sind, wobei die erste Reihe der ersten Seite des Fahrzeugs (4) zugewandt ist und die zweite Reihe der zweiten Seite des Fahrzeugs (4) zugewandt ist.

4. Sitzvorrichtung (2) nach Anspruch 3, wobei die Sitze (12) von dem restlichen Rahmen (8) abmontierbar sind.

5. Sitzvorrichtung (2) nach einem der vorhergehenden Ansprüche, wobei die oder jede Schutzstange (16) integral mit dem restlichen Rahmen (8) ausgebildet ist.

6. Sitzvorrichtung (2) nach einem der vorhergehenden Ansprüche, wobei die oder jede Schutzstange (16) von der vertikalen Ebene (18) versetzt ist, so dass sie einen Winkel von 5 - 25° mit der vertikalen Ebene (18) einnimmt.

7. Sitzvorrichtung (2) nach Anspruch 6, wobei die oder jede Schutzstange (16) einen Winkel von 20° mit der vertikalen Ebene (18) einnimmt.

8. Sitzvorrichtung (2) nach einem der vorhergehenden Ansprüche, wobei sich die oder jede Schutzstange (16) auf einer Höhe befindet, die leichten Zugang zu dem Sitz (12), damit man sich setzen und den Sitz (12) verlassen kann, ermöglicht.

9. Fahrzeug (4), das mit einer Sitzvorrichtung (2) nach einem der vorhergehenden Ansprüche versehen ist.

## Revendications

1. Système de siège (2) pour l'utilisation sur un véhicule (4) ayant une surface de support plate (6), lequel système de siège (2) comprend un cadre (8) offrant à une personne (10) assise sur le système de siège (2) une protection en cas de retournement au cas où le véhicule (4) se retourne sur son côté, au moins un siège tourné vers le côté (12), qui est monté dans le cadre (8) et qui est tel que la personne (10) soit assise sur le siège (12) de manière tournée vers l'extérieur, avec son dos contre un plan vertical (18) s'étendant longitudinalement à travers le centre du cadre (8), et un moyen de fixation (14) pour fixer de manière amovible le système de siège (2) sur la surface de support plate (6) du véhicule (4), le système de siège (2) étant ainsi apte à être fixé sur la surface de support plate (6) et être retiré de la surface de support plate (6), **caractérisé en ce que** le cadre (8) comporte au moins une barre de protection (16) qui s'étend longitudinalement par rapport au plan vertical (18), qui est décalée du plan vertical (18), et qui est positionnée au niveau d'une partie supérieure (20) du cadre (8) par-dessus le siège (12) et à proximité de la tête d'une personne (10) lorsque la personne (10) est assise sur le siège (12) et est tournée vers l'extérieur, avec son dos contre le plan vertical (18), la barre de protection (16) conférant une protection à la personne (10) sur le siège (12) au cas où un objet tomberait vers le système de siège (2) depuis le haut et au cours du déplacement normal du véhicule (4) .

2. Système de siège (2) selon la revendication 1, dans lequel il est prévu une pluralité de sièges tournés vers le côté (12), avec au moins un premier des sièges (12) tourné vers un premier côté du véhicule (4) et au moins un deuxième des sièges (12) tourné vers un deuxième côté du véhicule (4), et dans lequel il est prévu deux barres de protection (16), une première des barres de protection (16) étant prévue pour le premier des sièges (12) tourné vers le premier côté du véhicule (4) et une deuxième des barres de protection (16) étant prévue pour le deuxième des sièges (12) tourné vers le deuxième côté du véhicule (4).

3. Système de siège (2) selon la revendication 2, dans lequel la pluralité de sièges (12) est disposée en deux rangées avec la première rangée tournée vers le premier côté du véhicule (4) et la deuxième rangée tournée vers le deuxième côté du véhicule (4).

4. Système de siège (2) selon la revendication 3, dans lequel les sièges (12) peuvent être démontés du reste du cadre (8).

5. Système de siège (2) selon l'une quelconque des revendications précédentes, dans lequel la ou chaque barre de protection (16) est formée intégralement avec le reste du cadre (8).

6. Système de siège (2) selon l'une quelconque des revendications précédentes, dans lequel la ou chaque barre de protection (16) est décalée du plan vertical (18) de manière à former un angle de 5 - 25° avec le plan vertical (18).

7. Système de siège (2) selon la revendication 6, dans lequel la ou chaque barre de protection (16) forme un angle de 20° avec le plan vertical (18).

8. Système de siège (2) selon l'une quelconque des revendications précédentes, dans lequel la ou chaque barre de protection (16) est à une hauteur qui permet un accès aisé au siège (12) pour monter et descendre du siège (12).

9. Véhicule (4) pourvu d'un système de siège (2) selon l'une quelconque des revendications précédentes.
